# EUROPEAN PATENT SPECIFICATION

(11) **EP 3 923 731 B1**
(45) Date of publication and mention of the grant of the patent: **11.01.2023**
(21) Application number: 20713068.3
(22) Date of filing: 14.02.2020
(51) Int. Cl.: A21C 15/00, A63H 37/00

(54) **A DEVICE FOR EJECTING ITEMS FROM A CAKE**
VORRICHTUNG ZUM AUSWERFEN VON GEGENSTÄNDEN AUS EINEM KUCHEN
DISPOSITIF POUR ÉJECTER DES OBJETS D'UN GÂTEAU

(30) Priority: 15.02.2019 GB 201902147
(43) Date of publication of application: 22.12.2021
(73) Proprietor: Wow Tubes Ltd, Harrogate, North Yorkshire HG3 5JZ (GB)
(72) Inventor: HOWIE, Emma Elizabeth, Durham Durham DH1 5SJ (GB); STEPHENS, Glenn, Durham Durham DH7 9JH (GB)
(74) Representative: Murgitroyd & Company
(86) International application number: PCT/GB2020/050360
(87) International publication number: WO 2020/165609

(56) References cited:
- WO-A1-2019/028741
- CN-Y- 2 820 264
- DE-U1- 20 206 766
- US-B1- 6 572 435
- US-B1- 7 350 477

## Description

### Field of the Invention

The present invention relates to a device for ejecting items from a cake and a method of assembling the device. The invention further relates to a platform having a surface for supporting a cake and a device for ejecting items from the cake, and a method for preparing a cake on such a platform. The present invention also relates to a device that is positioned in a cake or other confection, a cake comprising said cake device, and a method for preparing a cake having such a device.

### Background of the Invention

A device capable of ejecting items, such as edible confetti, from a cake would add an extra element of surprise and entertainment to occasions involving celebratory cakes.

A number of launchers for ejecting confetti have been described in the art. However, most of these launching devices are powered by compressed gas canisters located at the base of a housing in which the confetti are held. A release mechanism is activated such that the gas surges through the housing at speed, propelling the confetti out the device. Other known devices use gas cylinder activation by chemical ignition and other low load pyrotechnic discharge devices.

These types of devices are generally unsuitable for use in celebratory cakes. In particular, regulatory requirements often prohibit the use of compressed gas in food products. Further, the use of compressed gas is also undesirable from the point of view of transportation of the final product, in particular, during export and import of the product.

In US7350477 B1, an air chamber is used to provide a controlled amount of air pressure to eject edible particles from a chamber within a celebration cake. A remote pump is used to generate compressed air to pressurise the air chamber. Other embodiments of this device use an internal spring release piston or a pyrotechnic activated gas generating device to generate air pressure. However, the reliance on air pressure to provide the propulsion force means that a complex, multi-component, system is required in order to deliver a controlled ejection profile suitable for use with celebration cakes. This is in addition to the limitations of using pyrotechnic activated gas devices as discussed above.

WO2019028741 A1 discloses a device for ejecting items from a cake.

Cakes and confections are also enhanced by adding many different types of adornments, known as cake toppers. Typical cake toppers are inanimate models or objects. A cake topper in the form of an inflatable character would therefore add an extra element of surprise and entertainment to occasions involving celebratory cakes.

Large inflatable objects in the shape of characters have been used as advertising products and for providing entertainment value at social events, such as parties and weddings. Typical inflatable devices of this type are characterised by a tubular body with a first open end that can be attached to a fan or other means of generating a gas flow. At the first open end, the fan can inflate the tubular body with the gas, e.g., air. The air can exit the tubular body at another open end. As air from the fan flows through the tubular body, the inflatable object can move unpredictably. Inflatable objects having multiple tubular portions can resemble humans with tube arms and/or legs that move with lifelike, dynamic motion.

This invention aims to obviate or at least mitigate the existing disadvantages associated with known devices in the art.

### Summary of Invention

In a first aspect, there is provided a device for ejecting items from a cake according to claim 1. The device comprises:
a tube for receiving the items;
a moveable member disposed within the tube;
a spring configured to urge the moveable member away from a first position to a second position;
a catch mechanism configured to lock the moveable member in the first position against the force of the spring; and
an actuator configured to release the catch mechanism;
wherein the catch mechanism comprises a part of the moveable member, a base portion and a part of the actuator that is configured to interlock with the part of the moveable member;
wherein releasing the catch mechanism causes the moveable member to move from the first position to the second position, thereby propelling the items from the tube; and characterised in that the part of the moveable member is a protrusion and the part of the actuator is a fork, wherein the fork comprises two resiliently deformable prongs and the base portion comprises a socket configured to receive the two resiliently deformable prongs and constrict the fork around the protrusion when the moveable member is in the first position.

In other words, the spring is compressed towards the first position and in a relaxed state in the second position. Therefore, the device can utilise the energy stored in the spring when the moveable member is in the first position to drive the moveable member to the second position, thereby propelling the items from the tube. This provides the advantage that the device avoids any use of compressed gas, thereby eliminating all safety concerns associated with compressed gas systems. Additionally, the device of the present invention does not require a complex system for producing *in situ* generated air pressure. The device is therefore quicker and easier to operate as well as being more cost-effective to manufacture.

The 'items' may be confetti or edible items, such as confectionary items. "Tube" should be understood to mean any hollow housing, which is at least open at one end. For example, the tube may cylindrical.

Optionally, the moveable member is a cup.

Optionally, the spring may be a coil spring. For example, the spring may be a conical coil spring.

Optionally, the actuator may be integrally formed with a part of the catch mechanism.

The actuator may be adapted to be hand-operated. This provides the advantage that the device can be operated in a simple and straightforward manner. For example, the actuator may comprise a shaft extending from a part of the catch mechanism to a pull handle. This provides the advantage that the catch mechanism can be released remotely. That is, when the device is *in situ* (i.e. within the centre of a cake), the shaft can be arranged to position the pull handle at the outer perimeter of the cake platform. Thus, the actuator can be easily accessed and the catch mechanism can be released without requiring direct access to the device.

The base portion may be integrally formed with a platform having a surface for supporting a cake. That is, the base portion may be formed separately to, or integrally with, the platform.

Optionally, actuation of the actuator at least partially withdraws the resiliently deformable prongs from the socket such that the prongs expand around the protrusion, thereby releasing the catch mechanism.

Optionally, the socket comprises two grooves, wherein each groove is configured to receive one of the two resiliently deformable prongs, and wherein the grooves are spaced apart such that the fork is constricted around the protrusion when the moveable member is in the first position.

The catch mechanism may further comprise a retainer configured to prevent unintended release of the catch mechanism.

Optionally, the retainer is disposed between the base portion and the moveable member such that the retainer provides an upper surface to the base portion. That is, a lower surface of the retainer provides an upper surface to the base portion.

In a second aspect, there is provided a device for ejecting items from a cake according to claim 7. The device comprises:
a tube for receiving the items;
a moveable member disposed within the tube;
a spring configured to urge the moveable member away from a first position to a second position;
a catch mechanism configured to lock the moveable member in the first position against the force of the spring; and
an actuator configured to release the catch mechanism;
wherein the catch mechanism comprises a part of the moveable member and a base portion, wherein a part of the base portion is configured to interlock with the part of the moveable member;
wherein releasing the catch mechanism causes the moveable member to move from the first position to the second position, thereby propelling the items from the tube; and characterised in that the part of the moveable member is a protrusion and the part of the base portion comprises a pair of opposing jaws configured to receive the protrusion when the moveable member is in the first position, and wherein the jaws are resiliently deformable between a closed configuration, in which the moveable member is locked in the first position, and an open configuration, in which the moveable member is released from the jaws.

Optionally, actuation of the actuator may resiliently urge the jaws from the closed configuration to the open configuration, thereby releasing the catch mechanism.

The tube may further comprise a stop for contacting the moveable member in the second position to prevent ejection of the moveable member from the tube. It will be readily appreciated that the stop can take any shape and position suitable to prevent the moveable member exiting the tube. In particular, the stop need not necessarily extend around the entire circumference of the inner surface of the tube. Further, the stop may be located at any point on the tube to provide a desired second position.

In a third aspect there is provided a platform comprising a device according to the first or second aspect, wherein the platform includes a surface for supporting a cake. For example, the device may be centrally disposed in the platform.

In a fourth aspect, there is provided a cake comprising a device according to the first or second aspect.

In a fifth aspect, there is provided a method for preparing a cake, the method comprising:
providing a platform according to the third aspect;
providing a cake having an opening extending therethrough; and mounting the cake on the surface of the platform, wherein the device is inserted into the opening such that the cake surrounds the device.

### Brief Description of Figures

The accompanying drawings illustrate presently exemplary embodiments of the disclosure, and together with the general description given above and the detailed description of the embodiments given below, serve to explain, by way of example, the principles of the disclosure.
**Figure 1** shows an exploded view of a device according to the present invention.
**Figure 2** shows an alternative exploded view of the device shown in Figure 1.
**Figure 3** shows a view of a tube according to the present invention.
**Figure 4A** shows a top view of the tube shown in Figure 3, indicating section A-A.
**Figure 4B** shows a cross-sectional of the tube shown in Figure 4A through section A-A.
**Figure 5** shows a view of a cup according to the present invention.
**Figure 6A** shows a top view of the cup shown in Figure 5, indicating section A-A.
**Figure 6B** shows a cross-sectional view of the cup shown in Figure 6A through section A-A.
**Figure 7A** shows a view of an actuator according to the present invention.
**Figure 7B** shows a top view of the actuator shown in Figure 7A.
**Figure 8A** shows a view of the base portion formed in a platform having a surface for supporting a cake, according to the present invention.
**Figure 8B** shows a top view of the base portion shown in Figure 8A.
**Figure 9A** shows a view of a retainer according to the present invention.
**Figure 9B** shows a top view of the retainer shown in Figure 9A, indicating section A-A.
**Figure 9C** shows a cross-sectional view of the retainer shown in Figure 9B through section A-A.
**Figure 10A** shows a view of a conical coil spring according to the present invention.
**Figure 10B** shows a cross-sectional view of the conical coil spring shown in Figure 10A.
**Figure 11A** shows a view of the unactuated device installed in a platform with a surface for supporting a cake, according to the present invention.
**Figure 11B** shows a top view of the device shown in Figure 11A, indicating sections A-A and B-B.
**Figure 11C** shows a cross-sectional perspective view of the device shown in Figure 11B through section A-A.
**Figure 11D** shows a cross-sectional perspective view of the device shown in Figure 11B through section B-B.
**Figure 11E** shows a cross-sectional view of the device shown in Figure 11B through section A-A.
**Figure 11F** shows an expanded view of the device shown in Figure 11E.
**Figure 12A** shows a view of the actuated device installed in a platform with a surface for supporting a cake, according to the present invention.
**Figure 12B** shows a top view of the device shown in Figure 12A, indicating sections A-A and B-B.
**Figure 12C** shows a cross-sectional perspective view of the device shown in Figure 12B through section A-A.
**Figure 12D** shows a cross-sectional perspective view of the device shown in Figure 12B through section B-B.
**Figure 12E** shows a cross-sectional view of the device shown in Figure 12B through section A-A.
**Figure 12F** shows an expanded view of the device shown in Figure 12E.
**Figure 13** shows an alternative embodiment of the device, in which the cup is locked in the first position, according to the present invention.
**Figure 14** shows the device of Figure 13, in which the cup in the second position.
**Figure 15** shows an alternative embodiment of an actuation mechanism according to the present invention.
**Figure 16** shows a schematic representation of the actuation mechanism shown in Figure 15.
**Figure 17** shows an alternative embodiment of an actuator according to the present invention.
**Figure 18** show the rotatable member of the actuator shown in Figure 17.
**Figure 19** shows an alternative view of the actuator shown in Figure 17.
**Figure 20** shows an exploded view of a device not forming part of the claimed invention.
**Figure 21A** shows a side view of the device shown in Figure 20.
**Figure 21B** shows an isometric view of the device shown in Figure 20.
**Figure 22A** shows a top view of the device shown in Figure 20, indicating sections A-A and B-B.
**Figure 22B** shows a cross-sectional of the device shown in Figure 22A through section A-A.
**Figure 22C** shows a cross-sectional of the device shown in Figure 22A through section B-B.
**Figure 23** shows an exploded view of another device not forming part of the claimed invention.
**Figure 24** shows an isometric view of the device shown in Figure 23, which is partially assembled.
**Figure 25A** shows a side view of the device shown in Figure 23.

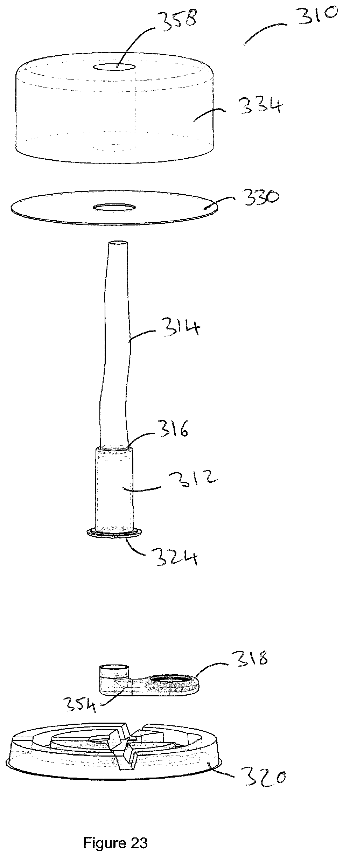

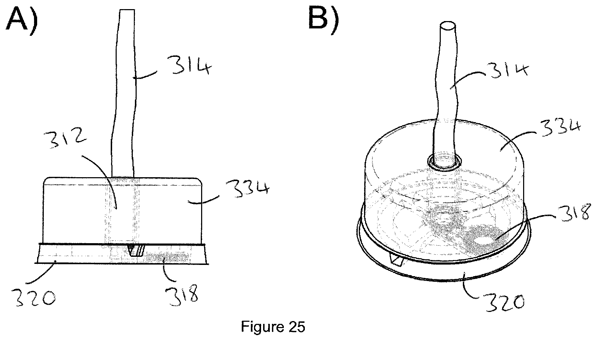

**Figure 25A** shows an isometric view of the device shown in Figure 23.

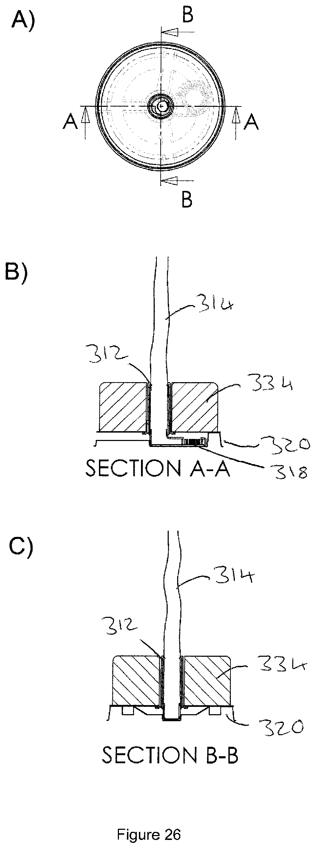

**Figure 26A** shows a top view of the device shown in Figure 23, indicating sections A-A and B-B.
**Figure 26B** shows a cross-sectional of the device shown in Figure 26A through section A-A.
**Figure 26C** shows a cross-sectional of the device shown in Figure 26A through section B-B.

### Detailed Description

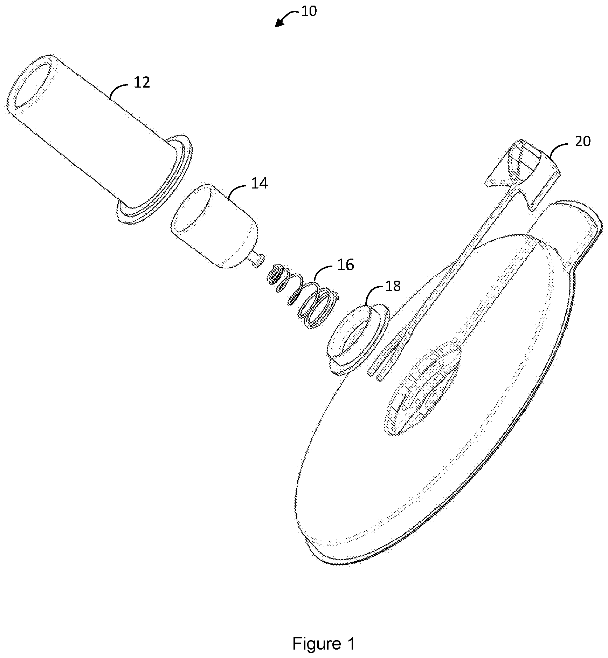

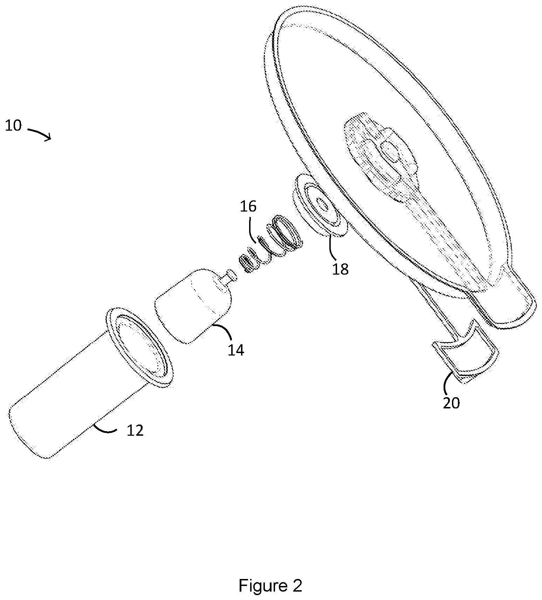

Figures 1 and 2 show an expanded view of an exemplary embodiment of the device 10 according to a first aspect of the present invention. As can be seen, the device 10 is generally formed from a tube 12 having a cup 14 and a spring 16 disposed therein. The device further comprises a retainer 18, which forms part of a catch mechanism, and an actuator 20 configured to release the catch mechanism. The device 10 can be formed from any suitable material, such as moldable plastics.

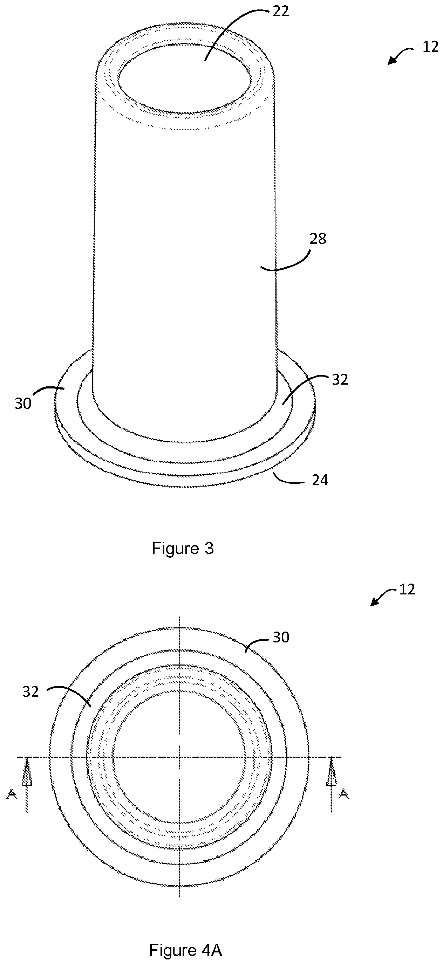

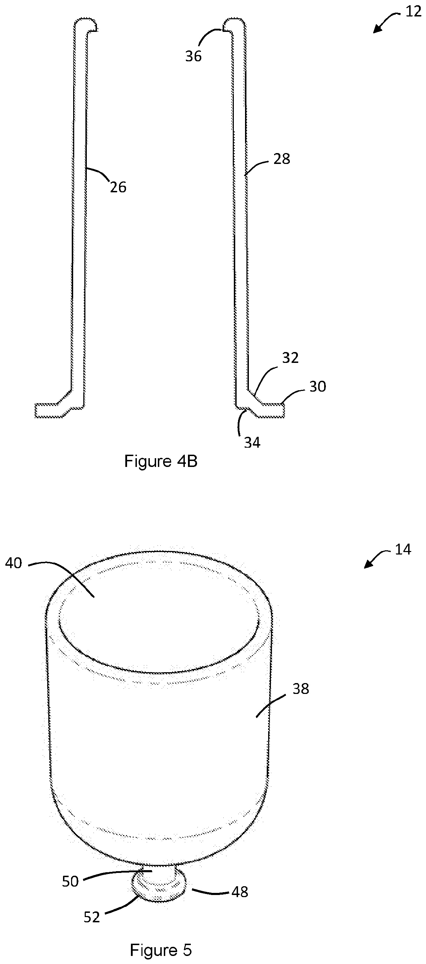

As shown in Figure 3, the tube 12 has an open first end 22 and an open second end 24. In the illustrated embodiment, the tube 12 is cylindrical. That is, the tube has a generally annular cross-section. However, it will be readily understood that the tube 12 can come in any number of shapes and sizes depending upon the particular application. As shown in Figures 4A and 4B, the tube 12 comprises a sidewall having an inner surface 26 and an outer surface 28. A circumferential flange 30 is connected to the second end 24 of the tube 12 via an angled sidewall portion 32 that extends from the outer surface 28. The angled sidewall portion 32 forms a corresponding indent 34 on the inner surface 26 of the tube 12. A stop is formed on the inner surface 26 of the tube 12 for contacting the cup 14 disposed within the tube 12, as will be described in more detail below. In the illustrated embodiment, the stop is a lip 36 formed at the first open end 22.

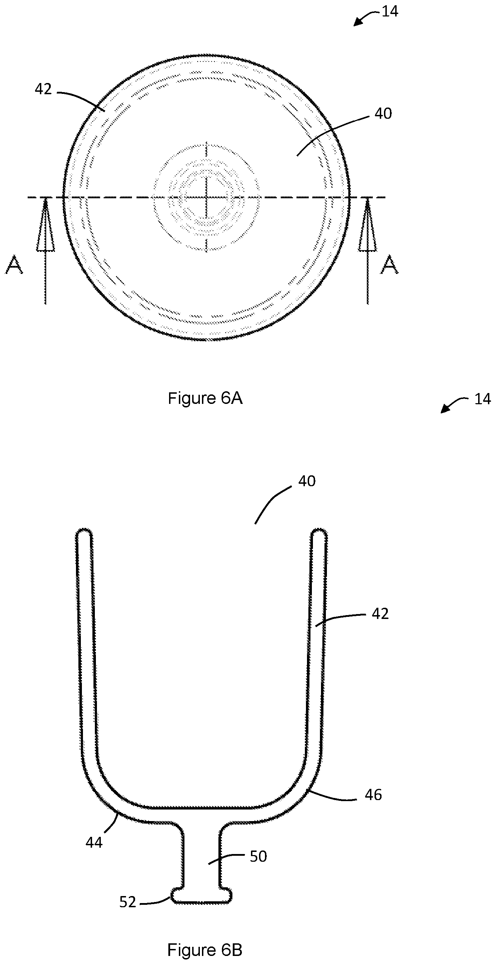

As shown in Figures 5, 6A and 6B, the cup 14 is a substantially hollow member having a body 38 defining an inner cavity 40. The body 38 is dimensioned to fit within the tube 12 such that the tube 12 is configured to receive the items to be ejected from the cake. In the illustrated embodiment, the cup 14 is generally circular with a U-shaped cross-section. That is, the body 38 includes a generally annular sidewall 42 connected to a flat base portion 44 by a convex sidewall portion 46. However, it will be understood by the skilled person that the cup 14 may be any suitable shape such that the tube is configured to receive items to be ejected from the cake. For example, the cup 14 may have a square U-shaped cross-section. Alternatively, the cup 14 may be replaced by a planar surface, such that the inner surface 26 of the tube 12 functions as a sidewall for retaining items placed on the planar surface.

The cup 14 further includes a protrusion 48, which forms part of the catch mechanism by interlocking with a part of the actuator 20. As shown in Figures 5 and 6B, the protrusion 48 comprises a post 50 extending from an outer surface of the flat base portion 44 and terminating in a disc-shaped end part 52.

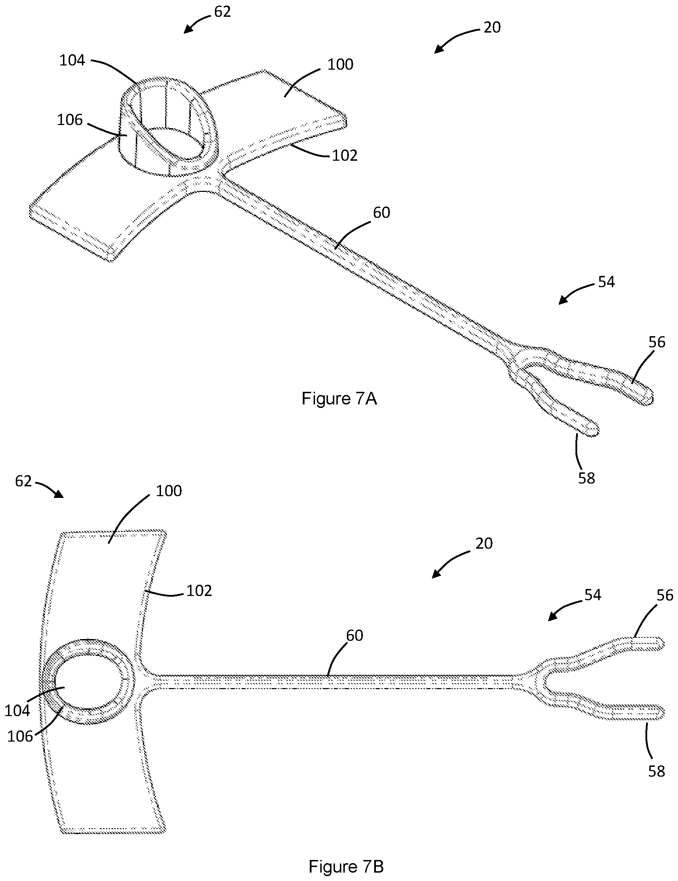

In the embodiment shown in Figures 7A and 7B, the actuator 20 comprises a fork 54 comprising first and second resiliently deformable prongs 56, 58. The first and second resiliently deformable prongs 56, 58 are configured to interlock with the protrusion 48, as described in more detail below. In this way, the fork 54 forms part of the catch mechanism. That is, the actuator 20 may be integrally formed with a part of the catch mechanism. The actuator 20 further comprises a shaft 60 extending from the fork 54 to a pull handle 62. In this way, the actuator 20 can be hand-operated.

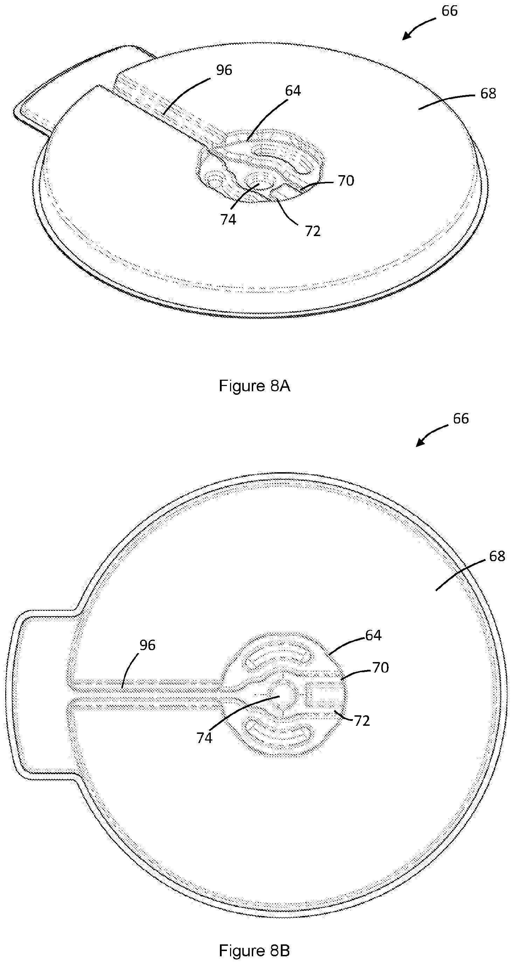

The catch mechanism furthers comprises a base portion 64. In the illustrated embodiment shown in Figures 8A and 8B, the base portion 64 is integrally formed with a platform 66, which includes a surface 68 for supporting a cake. That is, the base portion 64 is part of the platform 66. However, in alternative embodiments the base portion 64 and the platform 66 may be separate features. That is, the base portion 64 and the platform 66 may be formed and provided separately. For example, a separate base member may be reversibly coupled to the tube 12 and/or platform 66 via a push fit mechanism.

The base portion 64 includes a socket configured to receive the two resiliently deformable prongs 56, 58. Additionally, the socket is dimensioned such that the fork 54 is slidable between a first position and second position. In the illustrated embodiment shown in Figures 8A and 8B, the socket comprises first and second grooves 70, 72 for receiving the first and second resiliently deformable prongs 56, 58. In the first position, the first and second resiliently deformable prongs 56, 58 are only partially accommodated in the first and second grooves 70, 72. In the second position, the first and second prongs 56, 58 are fully inserted into the first and second grooves 70, 72. The first and second grooves 70, 72 are spaced apart such that the prongs constrict together as the fork 54 slides from the first position to the second position. The base portion 64 further includes a central aperture 74 extending below the level of the first and second grooves 70, 72.

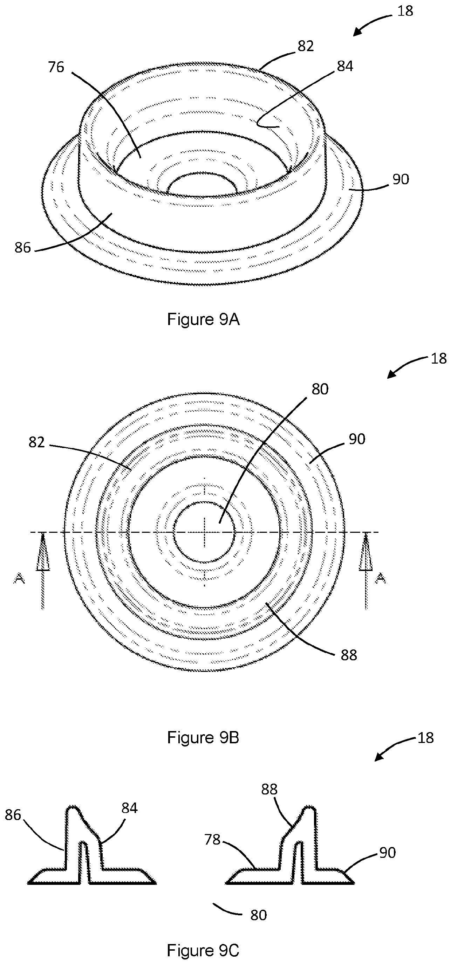

As referred to above, the catch mechanism also includes a retainer 18, which is configured to prevent unintended release of the catch mechanism. In the illustrated embodiment shown in Figures 9A-C, the retainer 18 comprises an annular base 76, which has a substantially planar surface 78 and a central aperture 80 extending therethrough. The retainer 18 further comprises an annular rising 82 comprising an inner wall 84 and an outer wall 86. The inner wall 84 extends vertically from the outer circumference of the annular base 76 and is connected to the outer wall 86 by a concave surface 88 extending upwardly from the top of the inner wall 84 to the top of the outer wall 86. The curvature of the concave surface 88 complements the convex sidewall portion 46 of the cup 14. The outer wall 86 includes a circumferential rim 90 that extends outwardly from the foot of the outer wall 86.

In use, the retainer 18 is inserted into the base portion 64 on the platform 66. In this way, the retainer 18 provides an upper sealing surface for the base portion 64. Thus, the retainer 18 is configured to secure the fork 54 in the base portion 64 in order to prevent accidental release of the cup 14. The tube 12 is coupled to the retainer 18 such that the inner surface 26 of the tube 12 and the indent 34 formed therein matingly engage with the outer wall 86 and the circumferential rim 90, respectively.

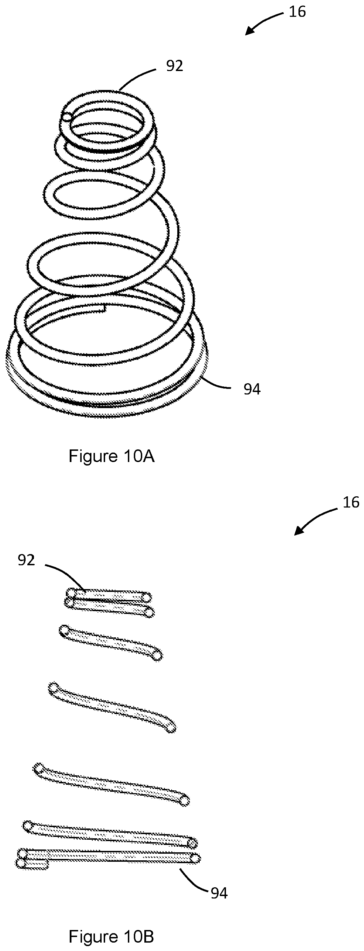

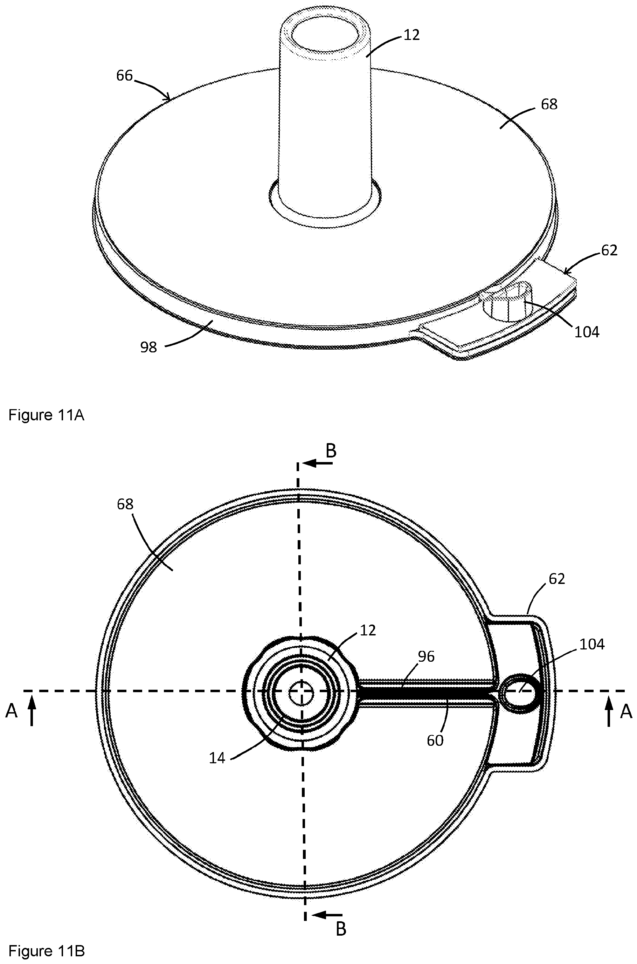

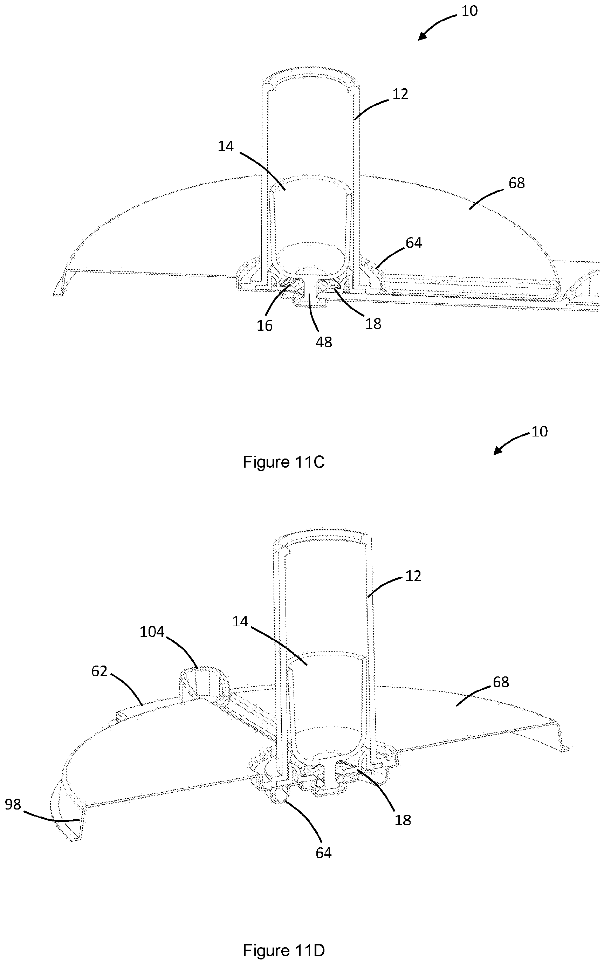

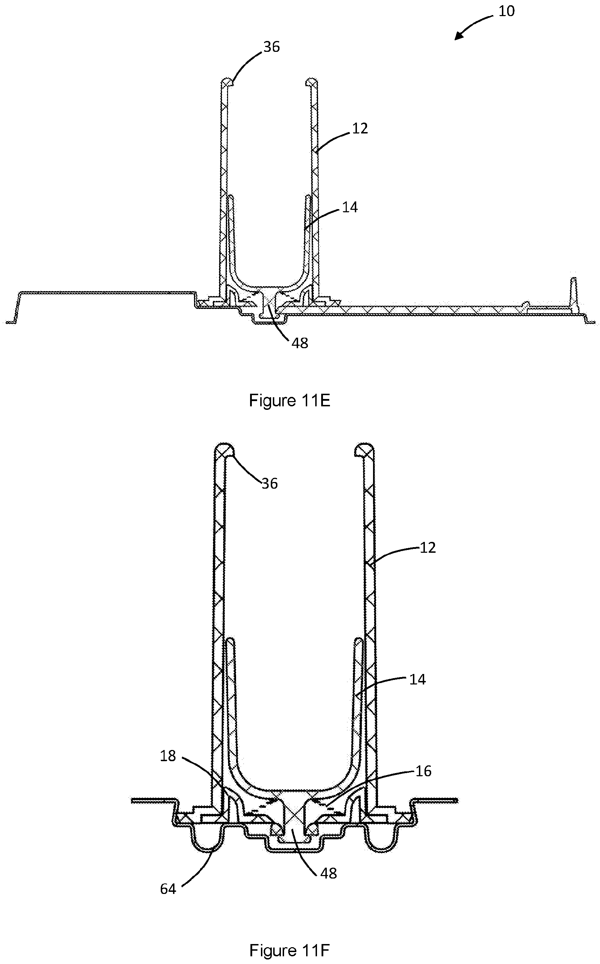

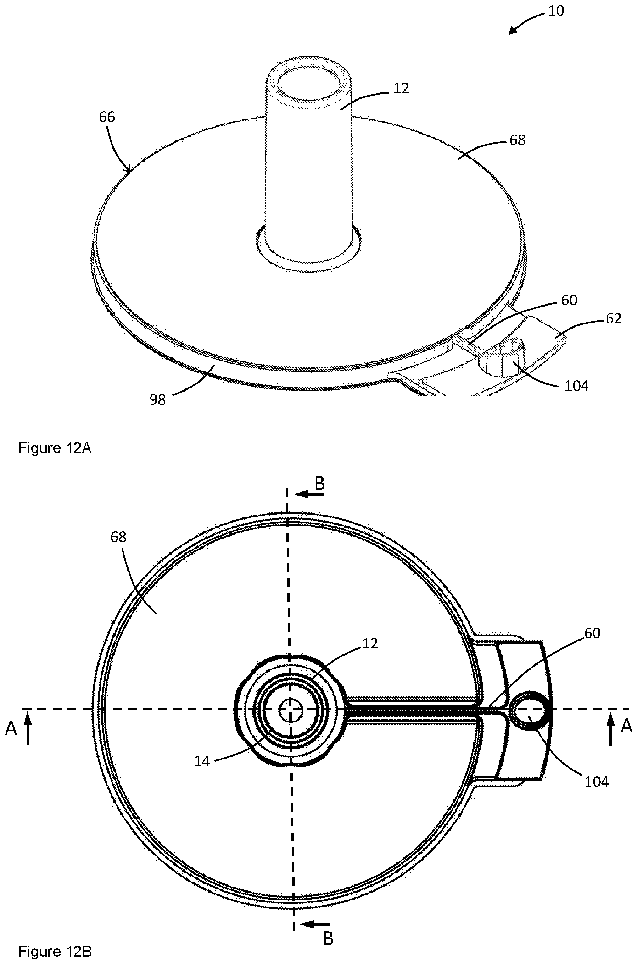

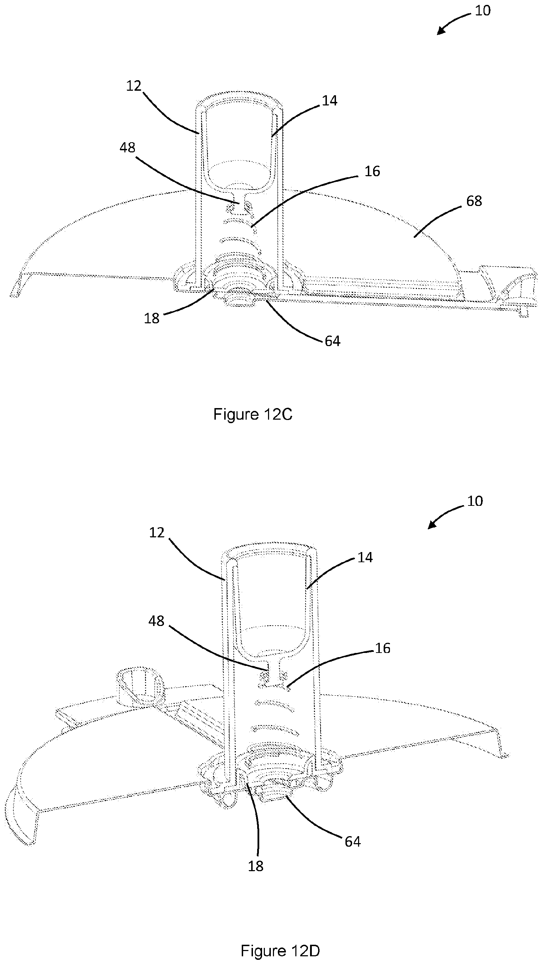

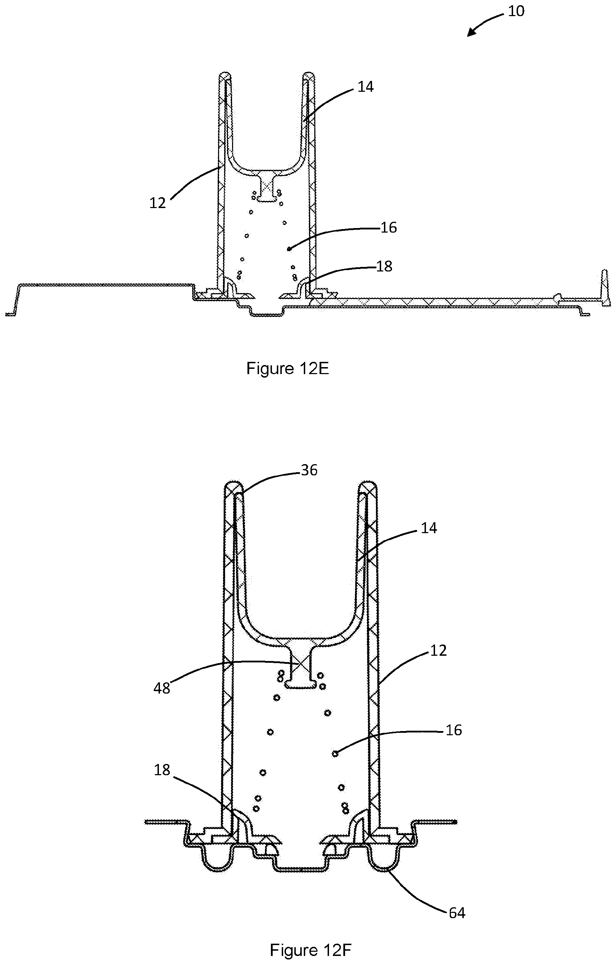

As described above, the device further includes a spring. In the illustrated embodiment shown in Figures 10A and 10B, the spring is a conical coil spring 16. The conical coil spring 16 is disposed within the tube 12 with the tapered end 92 associated with the protrusion 48 on the cup 14 and the opposite end 94 in contact with the retainer 18. In particular, the substantially planar surface 78 of the annular base 76 and the inner wall 84 provide supporting surfaces for the conical coil spring 16. The spring is configured to urge the cup 14 away from a first position to a second position. In particular, in the first position, shown in Figures 11A-F, the spring is compressed towards the retainer 18. In the second position, shown in Figures 12A-F, the spring is in a relaxed state. The dimensions of the protrusion 48 are such that it does not interfere with the spring when the spring is in a relaxed position, a compressed position, or a position therebetween.

The device 10 may be assembled as described above and installed onto a platform 66 including a surface 68 for supporting a cake. In the illustrated embodiments, the device 10 is centrally disposed in the platform 66. A cake having a hole shaped to receive the tube 12 may be mounted on the surface 68 of the platform 66 such that the cake surrounds the device 10. The shaft 60 of the actuator 20 extends through a through-bore 96 in the platform 66 to connect the fork 54 to the actuator handle 62, which is located at the outer circumferential edge 98 of the platform 66. The handle 62 includes a planar surface 100, which has a concave edge 102 that complements the curvature of the outer circumferential edge 98 of the platform 66. In the illustrated embodiment, the handle 62 includes a finger insert 104 having a cylindrical sidewall 106 extending vertically from the planar surface 100. However, it will be understood by the skilled person that the handle can be modified in any suitable way to allow a user to operate the actuator by hand.

To lock the cup 14 in the first position, the cup 14 is urged against the force of the spring to the first position shown in Figures 11A-F. The central aperture 74 in the base portion 64 and the central aperture 80 in the retainer 18 are coaxially aligned to receive the protrusion 48 when the cup 14 is in the first position. In this way, the disc-shaped end part 52 is positioned below the level of the grooves 70, 72. Using the actuator handle 62, the user can slide the fork 54 from the first position to the second position, thereby causing the resiliently deformable prongs 56, 58 to constrict around the post 50. The disc-shaped end part 52 engages against the deformable prongs 56, 58 to secure the cup 14 in the first position. That is, the catch mechanism is configured to lock the cup 14 in the first position against the force of the spring.

To release the catch mechanism, a user can simply retract the actuator handle 62 to the position shown in Figures 12A-F. In this way, the fork 54 moves from the second position to first position causing the prongs 56, 58 to expand and release the disc-shaped end part 52. This releases the cup 14 from the first position to the second position shown in Figures 12A-F. In other words, releasing the catch mechanism causes the cup 14 to move from the first position to the second position, thereby propelling the items from the tube 12. The cup 14 contacts the lip 36 on the tube 12 in the second position to prevent the cup 14 from exiting the tube 12.

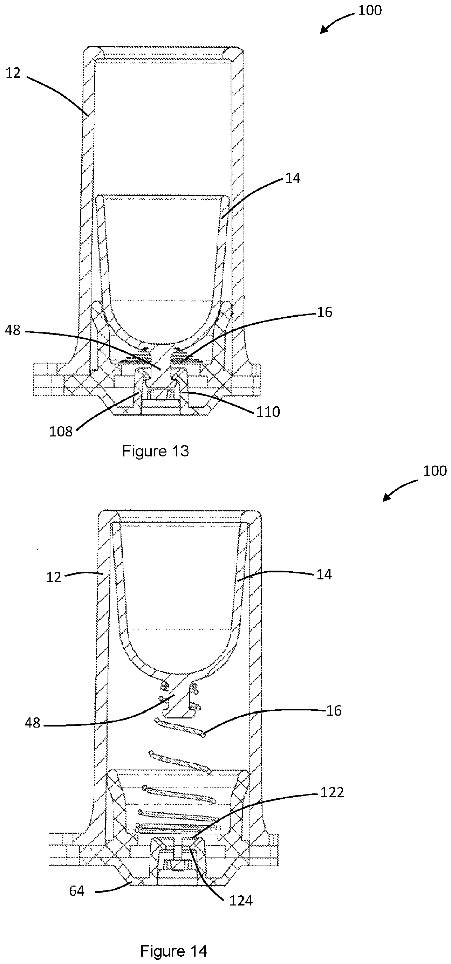

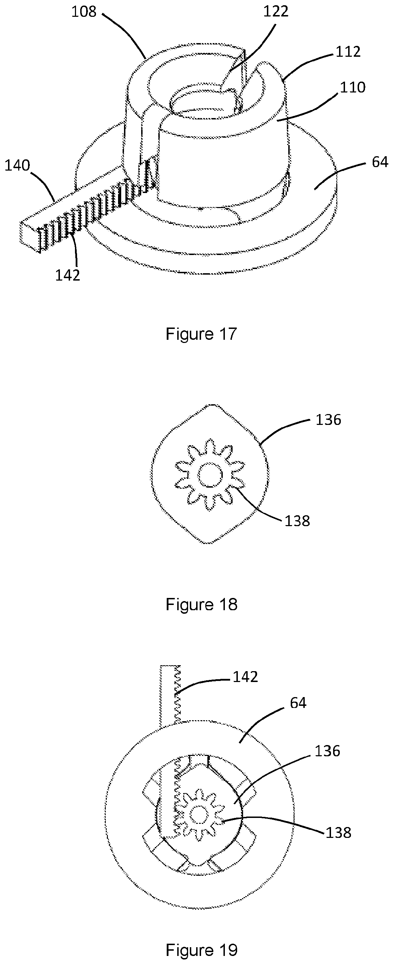

In other examples, the actuator may not be integrally formed with a part of the catch mechanism. That is, the actuator may be a separate element that is configured to interact with the catch mechanism in order to effect its release. For example, in the embodiments shown in Figures 13 to 19, the actuator is configured to release the catch mechanism by way of opening a pair of opposing resiliently deformable jaws. In Figure 13 to 19, the opposing jaws 108, 110 are formed from an annular body 112 that extends vertically from the base portion 114. As best seen in Figure 17, the annular body 112 includes diametrically opposed first and second slots 116, 118, thereby forming the opposing jaws. The upper end of each jaw includes a lip 120 that extends inwardly in the direction of the opposing jaw. Each lip 120 includes an upper surface 122 that is sloped toward the central axis of the annular body 112 and a perpendicular lower surface 124. In this way, the opposing jaws 108, 110 are configured to receive the protrusion 48 when the cup 14 is in the first position.

To lock the cup 14 in the first position, the cup 14 is urged against the force of the spring 16 towards the mouth of the jaws. As the disc-shape end part 52 of the protrusion 48 contacts the sloped upper surface 122 of the opposing lips 120, the jaws are prised apart to an open configuration. Once the disc-shape end part 52 passes through the lips 120, the jaws snap back to the original, closed configuration. The disc-shape end part 52 abuts the lower surface 124 of the lips 120 to lock the cup 14 in the first position as shown in Figure 13.

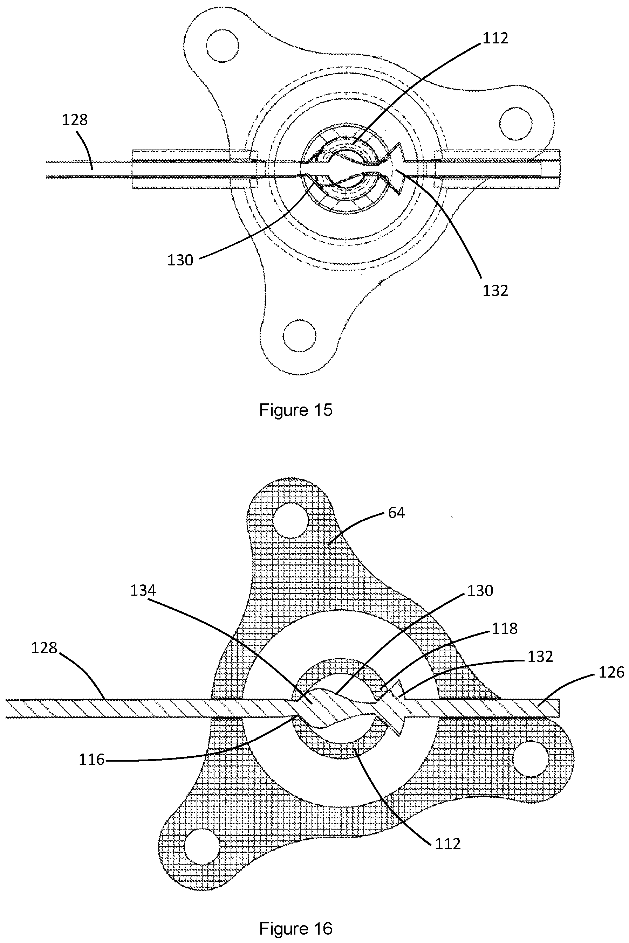

In the example shown in Figures 15 and 16, the actuator 126 comprises a shaft 128 having a first projection 130 and a second projection 132. As best seen in Figure 16, the first projection 130 has bulbous portion 134 which tapers in the direction of the second projection 132. The bulbous portion 134 is positioned within the annular body 112 and in abutment with the first slot 116. The second projection 132 is arrowhead-shaped and positioned on the on the outside of the annular body 112 with the arrow-tip in abutment with second slot 118. In this way, when a user pulls the actuator 126, the first and second projections 130, 132 resiliently urge the jaws 108, 110 from the closed configuration to the open configuration, thereby releasing the catch mechanism. That is, the protrusion 48 is released by the jaws 108, 110, and the cup 14 moves from the first position to the second position shown in Figure 14, thereby ejecting the items from the tube.

In the embodiment shown in Figures 17 to 19, the actuator comprises a rotatable member 136 disposed between the jaws 108, 110. The rotatable member 136 is generally elliptical in shape. In particular, the rotatable member 136 is dimensioned to fit between the closed jaws in a first aligned configuration and force the jaws apart to the open configuration when the rotatable member 136 is rotated to a second unaligned configuration. The rotatable member 136 is in mechanical communication with a cogwheel 138 positioned underneath the rotatable member 136. The actuator further comprises a shaft 140 having toothed region 142. The teeth are positioned and formed so as to interlock with the cogs on the cogwheel 138. The cup 14 is locked in the first position as described above. In this case, when a user pulls the actuator, the rotatable member 136 is rotated from the first aligned configuration to the second unaligned configuration. In this way, the jaws 108, 110 are resiliently urged from the closed configuration to the open configuration and the protrusion 48 is released. Thus, the cup 14 moves from the first position to the second position, thereby ejecting the items from the tube.

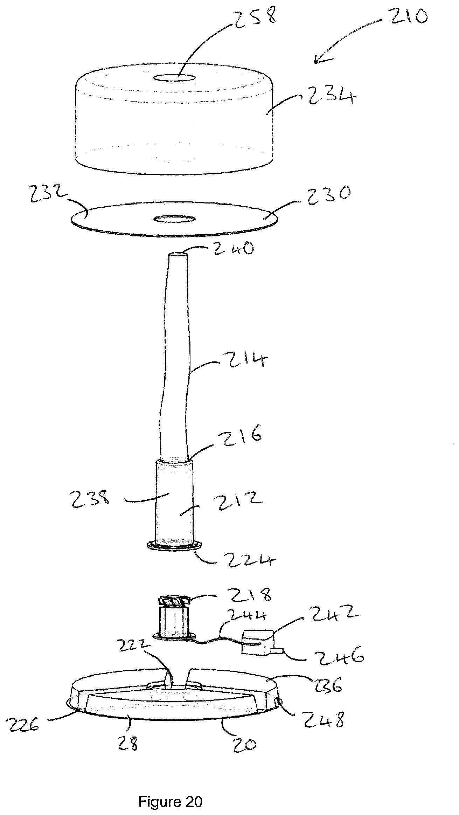

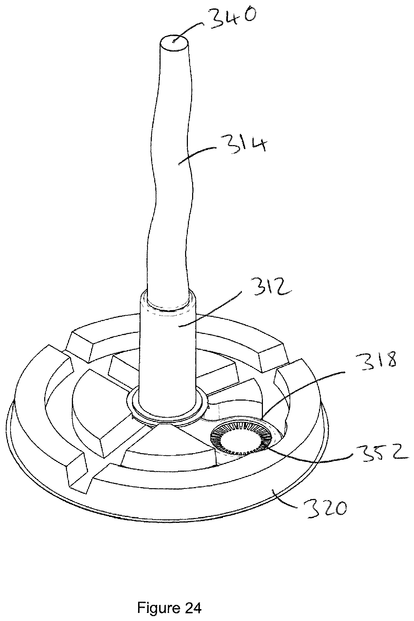

Figures 20 to 26 illustrate an alternative cake device 210 that does not form part of the claimed invention. Figures 20 shows an expanded view of the device 210. As can be seen, the device 210 is generally formed from a tube 212 having an inflatable object 214 connected to a first end 216 of the tube and a fan 218 for generating fluid flow, e.g. air, through the tube. The device 210 further comprises a base 220, which has a central recessed portion 222 configured to receive a second end of the tube 224. One or more fluid flow channels 226 extend from the central recessed portion 222 to an exterior peripheral surface 228 of the base 220. The device 210 further includes a platform 230 having a surface 232 for supporting a cake 234. The platform 230 may be formed separately to, or integrally with, the base 220.

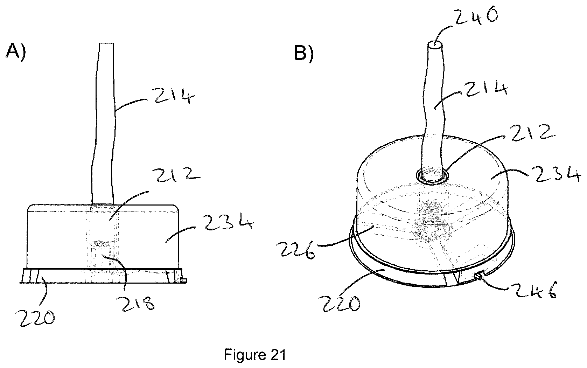

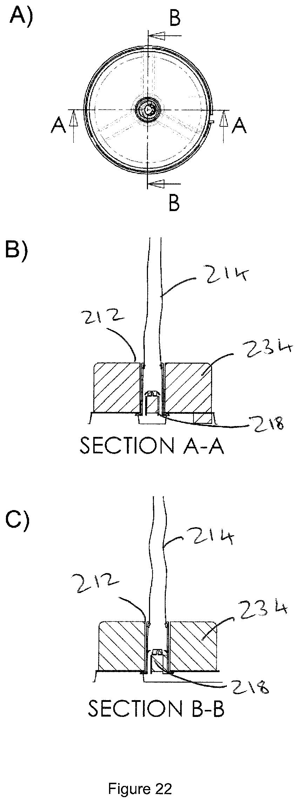

As shown in Figures 21 and 22, the device 210 is assembled with the fan 218 positioned in the central recessed portion 222 of the base 220 within the second end 224 of the tube 212. That is, the tube 212 is placed over the fan 218 such that the fan 218 is received within the interior cavity of the tube 212. The platform 230 is arranged on an upper surface 236 of the base 220, thereby securing the tube 212 in place and providing an upper surface to the fluid flow channels 226.

The inflatable object 214 has a tubular portion having a first open end 238 through which the fan 218 can inflate the inflatable object 214 with a gas, e.g., air. The tubular portion also has a second open end 240 through which air can exit the inflatable object 214. In this way, wherein the inflatable object 214 is inflated when the fluid flows through the tube 212, and deflated when fluid flow is absent.

The inflatable object 214 is shown in the form of a tubular shape for illustration purposes only. The inflatable object 214 can be assembled to resemble a human-like figure with a hollow central portion and two hollow, tubular, arm-like portions. For example, the inflatable object 214 may be in the form of a character, such as a comic book action hero. The inflatable object 214 may also have image, like a human face, on an exterior surface. Other variants include shapes resembling objects such as trees and flames. As the fan 218 blows air into the inflatable object, the character can move with lifelike and unpredictable dynamic motion. The first open end 238 can attach directly to the first end of the tube 212 through any suitable attachment, such as fixed fasteners, Velcro, buttons, rings, etc.

The inflatable object 214 can be created from a variety of materials. Exemplary materials may include, nylon, ripstop fabrics, oxford cloth, canvas, and blends of such materials. Preferred materials may be generally impermeable to gas from the fan. For other exemplary characteristics, the inflatable object materials may be high-strength, lightweight, non-rip, flexible, or durable.

In the example shown in Figures 20 to 22, the fan 218 is connected to a battery powered motor 242 by power cord 244. The motor 242 is operated by a switch 246 which protrudes through an opening 248 in the peripheral surface 228 of the base 220. In this way, the switch 246 is accessible to a user such that fan 218 can operated when a cake 234 is assembled on the surface 232 of the platform 230. Alternatively, the fan 218 may be operated wirelessly.

The fan 218 may be any gas delivery source or device that can inflate the inflatable object 214 with gas, e.g., air. Further, the fan need not be positioned within the cavity of the tube. That is, any configuration suitable to generate fluid flow through the tube may be used. For example, Figures 23 to 26 depict an alternative example in which the device 310 has a centrifugal fan 318. The centrifugal fan is arranged in a recessed portion of the base 320. The centrifugal fan 318 comprises a fan motor (not shown), a plurality of blades 352 and an air-guiding housing 354. An output end 356 of the housing 354 is arranged in communication with the second end 324 of the tube 312. Air flow generated by the centrifugal fan 318 exits the housing 354 at the output end 356 and is delivered to the inflatable object 314 via the first end 316 of the tube 312. A centrifugal fan may be advantageous in this context as they are robust, efficient, quiet, reliable, and capable of operating over a wide range of conditions.

The device 210, 310 may be assembled as described above. In the illustrated examples, the tube 212, 312 is centrally disposed in the base 220, 320. However, the tube may be located at any desired position on the base. A cake 234, 334 having a hole 258, 358 shaped to receive the tube 212, 312 may be mounted on the surface 232 of the platform 230, 320 such that the cake surrounds the device 212, 312. In use, the device is switched on by the user to activate the fan and inflate the inflatable object 214, 314 with gas, e.g., air.

## Claims

1. A device (10) for ejecting items from a cake, comprising:
a tube (12) for receiving the items;
a moveable member disposed within the tube (12);
a spring (16) configured to urge the moveable member away from a first position to a second position;
a catch mechanism configured to lock the moveable member in the first position against the force of the spring (16); and
an actuator (20) configured to release the catch mechanism;
wherein the catch mechanism comprises a part of the moveable member, a base portion and a part of the actuator that is configured to interlock with the part of the moveable member;
wherein releasing the catch mechanism causes the moveable member to move from the first position to the second position, thereby propelling the items from the tube; and
**characterised in that** the part of the moveable member is a protrusion (48) and the part of the actuator (20) is a fork (54), wherein the fork (54) comprises two resiliently deformable prongs (56, 58) and the base portion comprises a socket configured to receive the two resiliently deformable prongs (56,58) and constrict the fork (54) around the protrusion (48) when the moveable member is in the first position.

2. The device according to claim 1, wherein the base portion is formed integrally with a platform (66) having a surface (68) for supporting a cake.

3. The device according to claim 1 or 2, wherein actuation of the actuator (20) at least partially withdraws the resiliently deformable prongs (56, 58) from the socket such that the prongs (56, 58) expand around the protrusion (48), thereby releasing the catch mechanism.

4. The device according to any one of claims 1 to 3, wherein the socket comprises two grooves (70, 72), wherein each groove is configured to receive one of the two deformable prongs (56, 58), and wherein the grooves are spaced apart such that the fork (54) is constricted around the protrusion (48) when the moveable member is in the first position.

5. The device according to any one of claims 1 to 4, wherein the catch mechanism further comprises a retainer (18) configured to prevent unintended release of the catch mechanism.

6. The device according to claim 5, wherein the retainer (18) is disposed between the base portion and the moveable member such that the retainer (18) provides an upper surface to the base portion.

7. A device (100) for ejecting items from a cake, comprising:
a tube (12) for receiving the items;
a moveable member disposed within the tube (12);
a spring (16) configured to urge the moveable member away from a first position to a second position;
a catch mechanism configured to lock the moveable member in the first position against the force of the spring (16); and
an actuator (126) configured to release the catch mechanism;
wherein the catch mechanism comprises a part of the moveable member and a base portion, wherein a part of the base portion is configured to interlock with the part of the moveable member;
wherein releasing the catch mechanism causes the moveable member to move from the first position to the second position, thereby propelling the items from the tube; and
**characterised in that** the part of the moveable member is a protrusion (48) and the part of the base portion comprises a pair of opposing jaws (108, 110) configured to receive the protrusion (48) when the moveable member is in the first position, and wherein the jaws (108, 110) are resiliently deformable between a closed configuration, in which the moveable member is locked in the first position, and an open configuration, in which the moveable member is released from the jaws (108, 110).

8. The device according to claim 7, wherein actuation of the actuator (126) resiliently urges the jaws (108, 110) from the closed configuration to the open configuration, thereby releasing the catch mechanism.

9. The device according to any one of the preceding claims, wherein the tube (12) further comprises a stop for contacting the moveable member in the second position to prevent ejection of the moveable member from the tube.

10. The device according to any one of the preceding claims, wherein the tube (12) is cylindrical; and/or
wherein the moveable member is a cup (14).

11. The device according to any one of the preceding claims, wherein the spring (16) is a coil spring.

12. The device according to any one of the preceding claims, wherein the actuator (20; 126) is adapted to be hand-operated; and
optionally, wherein the actuator comprises a shaft (60; 128) that extends from a part of the catch mechanism to a pull handle (62).

13. A platform (66) comprising a device (10; 100) according to any one of claims 1 to 12, wherein the platform (66) includes a surface (68) for supporting a cake.

14. A cake comprising a device (10; 100) according to any one of claims 1 to 12.

15. A method for preparing a cake, the method comprising:
providing a platform (66) according to claim 13;
providing a cake having an opening extending therethrough; and
mounting the cake on the surface (68) of the platform (66), wherein the device (10; 100) is inserted into the opening such that the cake surrounds the device (10; 100).

## Patentansprüche

1. Eine Vorrichtung (10) zum Auswerfen von Gegenständen aus einem Kuchen, die Folgendes beinhaltet:
ein Rohr (12) zum Aufnehmen der Gegenstände;
ein bewegliches Element, das innerhalb des Rohrs (12) angeordnet ist;
eine Feder (16), die konfiguriert ist, um das bewegliche Element von einer ersten Position weg in eine zweite Position zu drängen;
einen Rastmechanismus, der konfiguriert ist, um das bewegliche Element in der ersten Position gegen die Kraft der Feder (16) zu verriegeln; und
einen Aktuator (20), der konfiguriert ist, um den Rastmechanismus zu lösen;
wobei der Rastmechanismus einen Teil des beweglichen Elements, einen Basisabschnitt und einen Teil des Aktuators beinhaltet, der konfiguriert ist, um mit dem Teil des beweglichen Elements zu verriegeln;
wobei das Lösen des Rastmechanismus bewirkt, dass sich das bewegliche Element von der ersten Position in die zweite Position bewegt, wodurch die Gegenstände aus dem Rohr getrieben werden; und
**dadurch gekennzeichnet, dass** der Teil des beweglichen Elements ein Vorsprung (48) ist und der Teil des Aktuators (20) eine Gabel (54) ist, wobei die Gabel (54) zwei elastisch verformbare Zinken (56, 58) beinhaltet und der Basisabschnitt eine Fassung beinhaltet, die konfiguriert ist, um die zwei elastisch verformbaren Zinken (56, 58) aufzunehmen und die Gabel (54) um den Vorsprung (48) herum zu verengen, wenn sich das bewegliche Element in der ersten Position befindet.

2. Vorrichtung gemäß Anspruch 1, wobei der Basisabschnitt einstückig mit einer Plattform (66) gebildet ist, die eine Oberfläche (68) zum Tragen eines Kuchens aufweist.

3. Vorrichtung gemäß Anspruch 1 oder 2, wobei die Betätigung des Aktuators (20) die elastisch verformbaren Zinken (56, 58) zumindest teilweise aus der Fassung zurückzieht, sodass sich die Zinken (56, 58) um den Vorsprung (48) herum ausdehnen, wodurch der Rastmechanismus gelöst wird.

4. Vorrichtung gemäß einem der Ansprüche 1 bis 3, wobei die Fassung zwei Rillen (70, 72) beinhaltet, wobei jede Rille konfiguriert ist, um einen der zwei verformbaren Zinken (56, 58) aufzunehmen, und wobei die Rillen voneinander beabstandet sind, sodass die Gabel (54) um den Vorsprung (48) herum verengt ist, wenn sich das bewegliche Element in der ersten Position befindet.

5. Vorrichtung gemäß einem der Ansprüche 1 bis 4, wobei der Rastmechanismus ferner einen Halter (18) beinhaltet, der konfiguriert ist, um ein unbeabsichtigtes Lösen des Rastmechanismus zu verhindern.

6. Vorrichtung gemäß Anspruch 5, wobei der Halter (18) zwischen dem Basisabschnitt und dem beweglichen Element angeordnet ist, sodass der Halter (18) dem Basisabschnitt eine obere Fläche bereitstellt.

7. Eine Vorrichtung (100) zum Auswerfen von Gegenständen aus einem Kuchen, die Folgendes beinhaltet:
ein Rohr (12) zum Aufnehmen der Gegenstände;
ein bewegliches Element, das innerhalb des Rohrs (12) angeordnet ist;
eine Feder (16), die konfiguriert ist, um das bewegliche Element von einer ersten Position weg in eine zweite Position zu drängen;
einen Rastmechanismus, der konfiguriert ist, um das bewegliche Element in der ersten Position gegen die Kraft der Feder (16) zu verriegeln; und
einen Aktuator (126), der konfiguriert ist, um den Rastmechanismus zu lösen;
wobei der Rastmechanismus einen Teil des beweglichen Elements und einen Basisabschnitt beinhaltet, wobei ein Teil des Basisabschnitts konfiguriert ist, um mit dem Teil des beweglichen Elements zu verriegeln;
wobei das Lösen des Rastmechanismus bewirkt, dass sich das bewegliche Element von der ersten Position in die zweite Position bewegt, wodurch die Gegenstände aus dem Rohr getrieben werden; und
**dadurch gekennzeichnet, dass** der Teil des beweglichen Elements ein Vorsprung (48) ist und der Teil des Basisabschnitts ein Paar gegenüberliegender Backen (108, 110) beinhaltet, die konfiguriert sind, sodass sie den Vorsprung (48) aufnehmen, wenn sich das bewegliche Element in der ersten Position befindet, und wobei die Backen (108, 110) zwischen einer geschlossenen Konfiguration, in der das bewegliche Element in der ersten Position verriegelt ist, und einer offenen Konfiguration, in der das bewegliche Element von den Backen (108, 110) gelöst ist, elastisch verformbar sind.

8. Vorrichtung gemäß Anspruch 7, wobei die Betätigung des Aktuators (126) die Backen (108, 110) elastisch von der geschlossenen Konfiguration in die offene Konfiguration drängt, wodurch der Rastmechanismus gelöst wird.

9. Vorrichtung gemäß einem der vorhergehenden Ansprüche, wobei das Rohr (12) ferner einen Anschlag zum In-Kontakt-Bringen mit dem beweglichen Element in der zweiten Position beinhaltet, um ein Auswerfen des beweglichen Elements aus dem Rohr zu verhindern.

10. Vorrichtung gemäß einem der vorhergehenden Ansprüche, wobei das Rohr (12) zylindrisch ist; und/oder
wobei das bewegliche Element ein Becher (14) ist.

11. Vorrichtung gemäß einem der vorhergehenden Ansprüche, wobei die Feder (16) eine Spiralfeder ist.

12. Vorrichtung gemäß einem der vorhergehenden Ansprüche, wobei der Aktuator (20; 126) angepasst ist, um von Hand betätigt zu werden; und
optional, wobei der Aktuator eine Welle (60; 128) beinhaltet, die sich von einem Teil des Rastmechanismus zu einem Ziehgriff (62) erstreckt.

13. Eine Plattform (66), die eine Vorrichtung (10; 100) gemäß einem der Ansprüche 1 bis 12 beinhaltet, wobei die Plattform (66) eine Oberfläche (68) zum Tragen eines Kuchens umfasst.

14. Ein Kuchen mit einer Vorrichtung (10; 100) gemäß einem der Ansprüche 1 bis 12.

15. Ein Verfahren zum Zubereiten eines Kuchens, wobei das Verfahren Folgendes beinhaltet:
Bereitstellen einer Plattform (66) gemäß Anspruch 13;
Bereitstellen eines Kuchens mit einer sich dadurch erstreckenden Öffnung; und
Montieren des Kuchens auf der Oberfläche (68) der Plattform (66), wobei die Vorrichtung (10; 100) in die Öffnung eingeführt wird, sodass der Kuchen die Vorrichtung (10; 100) umgibt.

## Revendications

1. Un dispositif (10) pour éjecter des éléments d'un gâteau, comprenant :
un tube (12) pour recevoir les éléments ;
un organe déplaçable disposé à l'intérieur du tube (12) ;
un ressort (16) configuré pour éloigner l'organe déplaçable en le poussant d'une première position à une deuxième position ;
un mécanisme de blocage configuré pour verrouiller l'organe déplaçable dans la première position à l'encontre de la force du ressort (16) ; et
un actionneur (20) configuré pour libérer le mécanisme de blocage ;
où le mécanisme de blocage comprend une partie de l'organe déplaçable, une portion formant base et une partie de l'actionneur qui est configurée pour s'interverrouiller avec la partie de l'organe déplaçable ;
où la libération du mécanisme de blocage amène l'organe déplaçable à se déplacer de la première position à la deuxième position, propulsant de ce fait les éléments du tube ; et
**caractérisé en ce que** la partie de l'organe déplaçable est une saillie (48) et la partie de l'actionneur (20) est une fourche (54), la fourche (54) comprenant deux pattes déformables élastiquement (56, 58) et la portion formant base comprenant une emboîture configurée pour recevoir les deux pattes déformables élastiquement (56, 58) et serrer la fourche (54) autour de la saillie (48) lorsque l'organe déplaçable est dans la première position.

2. Le dispositif selon la revendication 1, où la portion formant base est formée d'un seul tenant avec une plateforme (66) ayant une surface (68) pour soutenir un gâteau.

3. Le dispositif selon la revendication 1 ou la revendication 2, où l'actionnement de l'actionneur (20) retire au moins partiellement les pattes déformables élastiquement (56, 58) de l'emboîture de telle sorte que les pattes (56, 58) se distendent autour de la saillie (48), libérant de ce fait le mécanisme de blocage.

4. Le dispositif selon n'importe laquelle des revendications 1 à 3, où l'emboîture comprend deux rainures (70, 72), chaque rainure étant configurée pour recevoir une des deux pattes déformables (56, 58), et les rainures étant espacées de telle sorte que la fourche (54) est serrée autour de la saillie (48) lorsque l'organe déplaçable est dans la première position.

5. Le dispositif selon n'importe laquelle des revendications 1 à 4, où le mécanisme de blocage comprend en outre une pièce de retenue (18) configurée pour empêcher la libération involontaire du mécanisme de blocage.

6. Le dispositif selon la revendication 5, où la pièce de retenue (18) est disposée entre la portion formant base et l'organe déplaçable de telle sorte que la pièce de retenue (18) fournit une surface supérieure à la portion formant base.

7. Un dispositif (100) pour éjecter des éléments d'un gâteau, comprenant :
un tube (12) pour recevoir les éléments ;
un organe déplaçable disposé à l'intérieur du tube (12) ;
un ressort (16) configuré pour éloigner l'organe déplaçable en le poussant d'une première position à une deuxième position ;
un mécanisme de blocage configuré pour verrouiller l'organe déplaçable dans la première position à l'encontre de la force du ressort (16) ; et
un actionneur (126) configuré pour libérer le mécanisme de blocage ;
où le mécanisme de blocage comprend une partie de l'organe déplaçable et une portion formant base, une partie de la portion formant base étant configurée pour s'interverrouiller avec la partie de l'organe déplaçable ;
où la libération du mécanisme de blocage amène l'organe déplaçable à se déplacer de la première position à la deuxième position, propulsant de ce fait les éléments du tube ; et
**caractérisé en ce que** la partie de l'organe déplaçable est une saillie (48) et la partie de la portion formant base comprend une paire de mâchoires (108, 110) opposées configurées pour recevoir la saillie (48) lorsque l'organe déplaçable est dans la première position, et où les mâchoires (108, 110) sont déformables élastiquement entre une configuration fermée, dans laquelle l'organe déplaçable est verrouillé dans la première position, et une configuration ouverte, dans laquelle l'organe déplaçable est libéré des mâchoires (108, 110).

8. Le dispositif selon la revendication 7, où l'actionnement de l'actionneur (126) pousse élastiquement les mâchoires (108, 110) de la configuration fermée à la configuration ouverte, libérant de ce fait le mécanisme de blocage.

9. Le dispositif selon n'importe laquelle des revendications précédentes, où le tube (12) comprend en outre une butée destinée à entrer en contact avec l'organe déplaçable dans la deuxième position pour empêcher l'éjection de l'organe déplaçable du tube.

10. Le dispositif selon n'importe laquelle des revendications précédentes, où le tube (12) est cylindrique ; et/ou
où l'organe déplaçable est une coupelle (14).

11. Le dispositif selon n'importe laquelle des revendications précédentes, où le ressort (16) est un ressort hélicoïdal.

12. Le dispositif selon n'importe laquelle des revendications précédentes, où l'actionneur (20 ; 126) est conçu pour être manœuvré à la main ; et
facultativement, où l'actionneur comprend une tige (60 ; 128) qui s'étend depuis une partie du mécanisme de blocage jusqu'à une poignée de tirage (62).

13. Une plateforme (66) comprenant un dispositif (10 ; 100) selon n'importe laquelle des revendications 1 à 12, la plateforme (66) incluant une surface (68) pour soutenir un gâteau.

14. Un gâteau comprenant un dispositif (10 ; 100) selon n'importe laquelle des revendications 1 à 12.

15. Un procédé pour préparer un gâteau, le procédé comprenant :
la fourniture d'une plateforme (66) selon la revendication 13 ;
la fourniture d'un gâteau ayant une ouverture s'étendant à travers celui-ci ; et
l'installation du gâteau sur la surface (68) de la plateforme (66), où le dispositif (10 ; 100) est inséré dans l'ouverture de telle sorte que le gâteau entoure le dispositif (10 ; 100).
